# EUROPEAN PATENT SPECIFICATION

(11) **EP 1 492 280 B1**
(45) Date of publication and mention of the grant of the patent: **16.08.2006**
(21) Application number: 04014896.7
(22) Date of filing: 24.06.2004
(51) Int. Cl.: H04L 12/56

(54) **Quality driven adaptive channel assignment in an OFDMA radio communication system**
Qualitätsgesteuerte adaptive Vergabe von Übertragungskanälen in einem OFDMA Funkkommunikationssystem
L'affectation adaptative des canaux sur la base de la qualité dans un système de radio communication OFDMA

(30) Priority: 24.06.2003 KR 2003041195
(43) Date of publication of application: 29.12.2004
(73) Proprietor: SAMSUNG ELECTRONICS CO., LTD., Suwon-si, Gyeonggi-do (KR)
(72) Inventor: Cho, Young-Kwon, Yeongtong-gu Suwon-si Gyeonggi-do (KR); Lee, Hyeon-Woo, Yeongtong-gu Suwon-si Gyeonggi-do (KR); Yoon, Seok-Hyun, Yeongtong-gu Suwon-si Gyeonggi-do (KR); Park, Dong-Seek, Yeongtong-gu Suwon-si Gyeonggi-do (KR); Joo, Pan-Yuh, Yeongtong-gu Suwon-si Gyeonggi-do (KR); Park, Seong-III, Yeongtong-gu Suwon-si Gyeonggi-do (KR)
(74) Representative: Grünecker, Kinkeldey, Stockmair & Schwanhäusser Anwaltssozietät

(56) References cited:
- US-A1- 2003 031 147
- US-B1- 6 246 881
- JUNQIANG LI ET AL: "A novel broadband wireless OFDMA scheme for downlink in cellular communications" IEEE CONFERENCE PROCEEDINGS, vol. 3, 16 March 2003 (2003-03-16), pages 1907-1911, XP010640061
- HAIDER K ET AL: "Evaluation of user capacity and channel model effect in HiperLAN/2 System" IEEE CONFERENCE PROCEEDINGS, 9 September 2002 (2002-09-09), pages 554-558, XP010611909
- SHENYLI ZHOU ET AL: "Generalized frequency hopping OFDMA through unknown frequency-selective multipath channels" IEEE CONFERENCE PROCEEDINGS, vol. 1, 23 September 2000 (2000-09-23), pages 56-60, XP010532467

## Description

The present invention relates generally to a communication system employing a Multiple Access scheme, and in particular, to an apparatus and method for transmitting/receiving data using a Multiple Access scheme based on an Orthogonal Frequency Division Multiplexing scheme.

With the introduction of a cellular mobile communication system in the U.S. in the late 1970's, South Korea started to provide a voice communication service in a first generation (1G) analog mobile communication system, commonly referred to as an AMPS (Advanced Mobile Phone Service) mobile communication system. In the mid 1990's, South Korea deployed a second generation (2G) mobile communication system, referred to as a Code Division Multiple Access (CDMA) mobile communication system, to provide voice and low-speed data services.

In the late 1990's, South Korea partially deployed a third generation (3G) mobile communication system, known as an IMT-2000 (International Mobile Telecommunication-2000) mobile communication system, aimed at advanced wireless multimedia service, worldwide roaming, and high-speed data service. The 3G mobile communication system was developed especially to transmit data at a higher rate along with the rapid increase of data volume.

The 3G mobile communication system is evolving to a fourth generation (4G) mobile communication system. The 4G mobile communication system is under standardization for the purpose of efficient integrated service between a wired communication network and a wireless communication network beyond the simple wireless communication service which the previous-generation mobile communication systems provide. It follows that technology for transmitting a large volume of data at up to a capacity level available in the wired communication network must be developed for the wireless communication network.

In this context, active research is being conducted on an Orthogonal Frequency Division Multiplexing (OFDM) scheme as a useful scheme for high-speed data transmission on wired/wireless channels in the 4G mobile communication system. The OFDM scheme, transmitting data using multiple carriers, is a special case of a Multiple Carrier Modulation (MCM) scheme in which a serial symbol sequence is converted into parallel symbol sequences and modulated into a plurality of mutually orthogonal sub-carriers (or sub-carrier channels).

The first MCM systems appeared in the late 1950's for high frequency (HF) radio communication in military applications, and the OFDM scheme for overlapping orthogonal sub-carriers was initially developed in the 1970's. In view of orthogonal modulation between multiple carriers, the OFDM scheme has limitations in actual implementation for systems. In 1971, Weinstein, et. al. proposed that OFDM modulation/demodulation can be efficiently performed using Discrete Fourier Transform (DFT), which was a driving force behind the development of the OFDM scheme. Also, the introduction of a guard interval and a cyclic prefix as the guard interval further mitigates adverse effects of multipath propagation and delay spread on systems. In the OFDM communication system transmitting OFDM symbols, the guard interval is inserted to remove interference between an OFDM symbol transmitted at a previous OFDM symbol time and a current OFDM symbol transmitted at a current OFDM symbol time. A "cyclic prefix" scheme or a "cyclic postfix" scheme is used for the guard interval. In the cyclic prefix scheme, a predetermined number of last samples in a time-domain OFDM symbol are copied and then inserted into an effective OFDM symbol, and in the cyclic postfix scheme, a predetermined number of first samples in a time-domain OFDM symbol are copied and then inserted into an effective OFDM symbol.

For this reason, the OFDM scheme has been widely exploited for digital data communication technologies such as digital audio broadcasting (DAB), digital TV broadcasting, wireless local area network (WLAN), and wireless asynchronous transfer mode (WATM). Although hardware complexity was an obstacle to wide use of the OFDM scheme, recent advances in digital signal processing technology including fast Fourier transform (FFT) and inverse fast Fourier transform (IFFT) enable the OFDM scheme to be implemented. The OFDM scheme, similar to an existing Frequency Division Multiplexing (FDM) scheme, boasts of optimum transmission efficiency in high-speed data transmission because it transmits data on sub-carriers, maintaining orthogonality among them. The optimum transmission efficiency is further attributed to good frequency use efficiency and robustness against multi-path fading in the OFDM scheme. Especially, overlapping frequency spectrums lead to efficient frequency use and robustness against frequency selective fading and multi-path fading. The OFDM scheme reduces effects of intersymbol interference (ISI) by use of guard intervals and enables design of a simple equalizer hardware structure. Furthermore, since the OFDM scheme is robust against impulse noise, it is increasingly popular in communication systems.

In conclusion, the advanced 4G mobile communication system considers both software for developing various contents and hardware for developing a wireless access scheme with high spectrum efficiency to provide the best quality of service (QoS).

The hardware considered in the 4G mobile communication system will now be described herein below.

In wireless communication, high-speed, high-quality data service is generally obstructed by a poor channel environment. In wireless communication, channel environments are frequently changed due to power variation of a received signal caused by a fading phenomenon, shadowing, a Doppler effect caused by movement and frequent change in velocity of a mobile station, and interference by another user and a multipath signal, as well as additive white Gaussian noise (AWGN). Therefore, in order to provide high-speed wireless data packet service, advanced technology capable of adaptively coping with channel variation is needed in addition to the technologies provided in the existing 2G or 3G mobile communication system. Even though a high-speed power control scheme adopted in the existing systems can adaptively cope with the channel variation, 3^{rd} Generation Partnership Project (3GPP), an asynchronous standardization organization for standardization of a high-speed data packet transmission system, and 3^{rd} Generation Partnership Project 2 (3GPP2), a synchronous standardization organization, commonly propose an Adaptive Modulation and Coding (AMC) scheme, and a Hybrid Automatic Retransmission Request (HARQ) scheme.

First, the AMC scheme will be described herein below.

The AMC scheme adaptively adjusts a modulation scheme and a coding scheme according to a channel variation of a downlink. A base station can detect channel quality information (CQI) of the downlink by generally measuring a signal-to-noise ratio (SNR) of a signal received from a mobile station. That is, the mobile station feeds back the channel quality information of the downlink to the base station over an uplink. The base station estimates a channel condition of the downlink using the channel quality information of the downlink fed back from the mobile station, and adjusts a modulation scheme and a coding scheme according to the estimated channel condition.

In a system employing the AMC scheme, for example a High Speed Downlink Packet Access (HSDPA) scheme proposed by 3GPP or a 1x Enhanced Variable Data and Voice (1xEV-DV) scheme proposed by 3GPP2, when a channel condition is relatively good, a high-order modulation scheme and a high coding rate are used. However, when a channel condition is relatively poor, a low-order modulation scheme and a low coding rate are used. Commonly, when a channel condition is relatively excellent, there is high probability that a mobile station will be located in a place near a base station. However, when a channel condition is relatively poor, there is high probability that the mobile station will be located at a boundary of a cell. In addition to the distance factor between the base station and the mobile station, a time-varying characteristic such as fading of a channel is also a major factor affecting a channel condition between the base station and the mobile station. The AMC scheme, compared with an existing scheme depending on high-speed power control, improves average performance of the system by increasing adaptability for a time-varying characteristic of a channel.

Second, the HARQ scheme, particularly an N-channel Stop And Wait HARQ (SAW HARQ) scheme, will be described herein below.

In a common Automatic Retransmission Request (ARQ) scheme, an acknowledgement (ACK) signal and retransmission packet data are exchanged between a user equipment (or a mobile station) and a radio network controller (RNC). However, in order to increase transmission efficiency of the ARQ scheme, the HARQ scheme newly employs the following two techniques. First, a retransmission request and a response are exchanged between the user equipment and a Node B (or a base station). Second, defective data is temporarily stored and combined with retransmission data of the corresponding data before being transmitted. In the HSDPA scheme, an ACK signal and retransmission packet data are exchanged between a user equipment and a medium access control (MAC) high-speed downlink shared channel (HS-DSCH) of a Node B. The HSDPA scheme introduces the N-channel SAW HARQ scheme that forms N logical channels and transmits several data packets before reception of an ACK signal. In the case of the SAW ARQ scheme, an ACK signal for previous packet data must be received before transmission of next packet data. Therefore, the SAW ARQ scheme is disadvantageous in that the user equipment or the Node B must occasionally wait for an ACK signal even though it can currently transmit packet data. The N-channel SAW HARQ scheme can increase utilization efficiency of channels by continuously transmitting a plurality of data packets before reception of an ACK signal for the previous packet data. That is, if N logical channels are set up between a user equipment and a Node B and the N logical channels can be identified by specific time or channel number, a user equipment receiving packet data can determine a logical channel over which packet data received at a particular time was transmitted, and reconfigure packet data in the correct reception order or soft-combine corresponding packet data.

The HARQ scheme can be classified into a Chase Combining (CC) scheme, a Full Incremental Redundancy (FIR) scheme, and a Partial Incremental Redundancy (PIR) scheme. In the CC scheme, the same entire packet data transmitted at initial transmission is transmitted even at retransmission. A receiver combines retransmitted packet data with initially transmitted packet data to improve reliability of coded bits input to a decoder, thereby acquiring entire system performance gain. When two same data packets are combined, a similar coding effect to that of iterative coding occurs, so a performance gain of about 3[dB] is generated on average. In the FIR scheme, because packet data comprised of only redundancy bits generated from a channel encoder is retransmitted, a coding gain of a decoder in a receiver is increased. That is, the decoder uses new redundancy bits as well as initially transmitted information during decoding, resulting in an increase in coding gain, thereby contributing to improvement in performance thereof. The PIR scheme, unlike the FIR scheme, transmits packet data comprised of information bits and new redundancy bits in combination. During decoding, the information bits are combined with initially transmitted information bits, thereby providing a similar effect to that of the CC scheme. Further, because the PIR scheme uses redundancy bits for decoding, it is similar to the FIR scheme in effect. Because the PIR scheme is relatively higher than the FIR scheme in coding rate, it generally has an approximately intermediate performance gain between the FIR scheme and the CC scheme. However, because the HARQ scheme considers system complexity such as a buffer size of a receiver and signaling as well as the performance gain, it is not easy to select an appropriate scheme.

Use of the AMC scheme and the HARQ scheme greatly improves entire system performance. However, even the use of the AMC scheme and the HARQ scheme cannot basically resolve a shortage problem of radio resources in wireless communications. In order to maximize subscriber capacity and enable high-speed data transmission necessary for multimedia service, a new Multiple Access scheme having excellent spectrum efficiency is needed, for high-speed, high-quality packet data service. Also, there is a demand for a method for adaptively transmitting/receiving data according to a channel condition, or channel quality, in a new high-speed, high-quality Multiple Access scheme having excellent spectrum efficiency.

Junqiang Li, et al, "A novel broadband wireless OFDMA scheme for downlink in cellular communications", IEEE Conference Proceedings, vol. 3, 16 March 2003, pages 1907-1911, describes an air interface scheme based on adaptive resource allocations for downlink in cellular OFDMA systems. The proposed method provides high spectral efficiency and high power efficiency. In order to reduce the co-channel interference and improve the capacity in a cell, a cell is partitioned into three 120° sectors and three adjacent sectors from different cells are composed as a "virtual cell" which is centrally controlled. Assuming knowledge of the instantaneous channel information for all sub-channels, bit rates and Quality of Service requirements of all active users in base stations, an adaptive resource allocations based wireless multi-user OFDM access is employed independently in each "virtual cell" by using the techniques such as multi-user diversity, interference measurement and bad channel avoidance over the whole system bandwidth.

US-B-6,246,881 describes that results of signal level measurements must be averaged in order to achieve a sufficient reliability, when a dynamic channel allocation based on monitoring of signal levels is used for channel allocation. Averaging causes a delay in measurement results, for which reason such a channel may be allocated the interference level of which has just changed, e.g., because another connection has been set up with functions nearby on the same channel. Accordingly, this document proposes that allocation of a channel causing excessive interference with a connection already set up is limited.

It is therefore, an object of the present invention to provide an improved apparatus and method for using wideband spectrum resources for high-speed wireless multimedia service.

This object is solved by the present invention and in particular by the subject matter of the independent claims. Preferred embodiments are the subject matter of the dependent claims.

Furthermore, it is an aspect of the present invention to provide an apparatus and method for transmitting/receiving data using wideband spectrum resources for providing high-speed wireless multimedia service.

It is further another aspect of the present invention to provide an apparatus and method for adaptively transmitting/receiving data according to channel quality in a communication system providing high-speed wireless multimedia service.

The above and other objects, features and advantages of the present invention will become more apparent from the following detailed description when taken in conjunction with the accompanying drawings in which:
FIG. 1 is a diagram schematically illustrating a method for assigning time-frequency resources based on an FH-OFDMA/CDM scheme according to an embodiment of the present invention;
FIG. 2 is a flowchart illustrating a procedure for assigning a sub-channel based on channel quality according to an embodiment of the present invention;
FIG. 3 is a detailed flowchart illustrating the sub-channel assignment procedure of FIG. 2;
FIG. 4 is a block diagram illustrating an internal structure of a base station apparatus according to an embodiment of the present invention;
FIG. 5 is a flowchart illustrating an operating procedure of a mobile station according to an embodiment of the present invention; and
FIG. 6 is a block diagram illustrating a structure of a mobile station apparatus according to an embodiment of the present invention.

A preferred embodiment of the present invention will now be described in detail with reference to the annexed drawings. In the following description, a detailed description of known functions and configurations incorporated herein has been omitted for conciseness.

The present invention provides a Multiple Access scheme for efficient utilization of time-frequency resources for high-speed, high-quality wireless multimedia service targeted by a next generation mobile communication system.

In order to provide high-speed, high-quality wireless multimedia service targeted by the next generation mobile communication system, wideband spectrum resources are needed. However, using of wideband spectrum resources increases a fading effect on a radio link due to multipath propagation, and causes a frequency selective fading effect even within a transmission band. Therefore, for high-speed wireless multimedia service, an Orthogonal Frequency Division Multiplexing (OFDM) scheme being robust against frequency selective fading has a higher gain compared with a Code Division Multiple Access (CDMA) scheme.

It is generally known that the OFDM scheme has high spectrum efficiency because spectrums between sub-carriers, or sub-carrier channels, overlap each other while maintaining mutual orthogonality. In the OFDM scheme, modulation is achieved by inverse fast Fourier transform (IFFT) and demodulation is achieved by fast Fourier transform (FFT). As a Multiple Access scheme based on the OFDM scheme, there is provided an Orthogonal Frequency Division Multiple Access (OFDMA) scheme in which some or all of sub-carriers are assigned to a particular mobile station. The OFDMA scheme does not need spreading sequences for spreading, and can dynamically change a set of sub-carriers assigned to a particular mobile station according to a fading characteristic of a radio link. The dynamic change in the set of sub-carriers assigned to a particular mobile station is called a "dynamic resource allocation" scheme. A Frequency Hopping (FH) scheme is an example of the dynamic resource allocation scheme.

However, a Multiple Access scheme requiring spreading sequences is classified into a spreading-in-time-domain scheme and a spreading-in-frequency-domain scheme. The spreading-in-time-domain scheme spreads signals of a mobile station, or a user equipment, in a time domain and then maps the spread signals to sub-carriers. The spreading-in-frequency-domain scheme demultiplexes user signals in a time domain, maps the demultiplexed signals to sub-carriers, and identifies user signals using orthogonal sequences in a frequency domain.

The Multiple Access scheme proposed in the present invention is characterized in that it is based on the OFDM scheme and further, it has a CDMA characteristic and is robust against frequency selective fading through the FH scheme. Herein, the newly proposed Multiple Access scheme is called "FH-OFDMA/CDM (Frequency Hopping-Orthogonal Frequency Division Multiple Access/Code Division Multiplexing)" scheme.

The FH-OFDMA/CDM scheme proposed in the present invention will now be described herein below.

The FH-OFDMA/CDM scheme efficiently assigns time-frequency resources to a plurality of mobile stations. The time-frequency resources assigned to each of the mobile stations is determined by particular bandwidth and time. The bandwidth is assigned according to type of service required by each mobile station. For example, a wide bandwidth is assigned to a mobile station that requires a service that needs a large time-frequency resource such as high-speed packet data service. However, a narrow bandwidth is assigned to a mobile station that requires a service that needs small time-frequency resource such as voice service. This means that it is possible to assign different time-frequency resources to each mobile station.

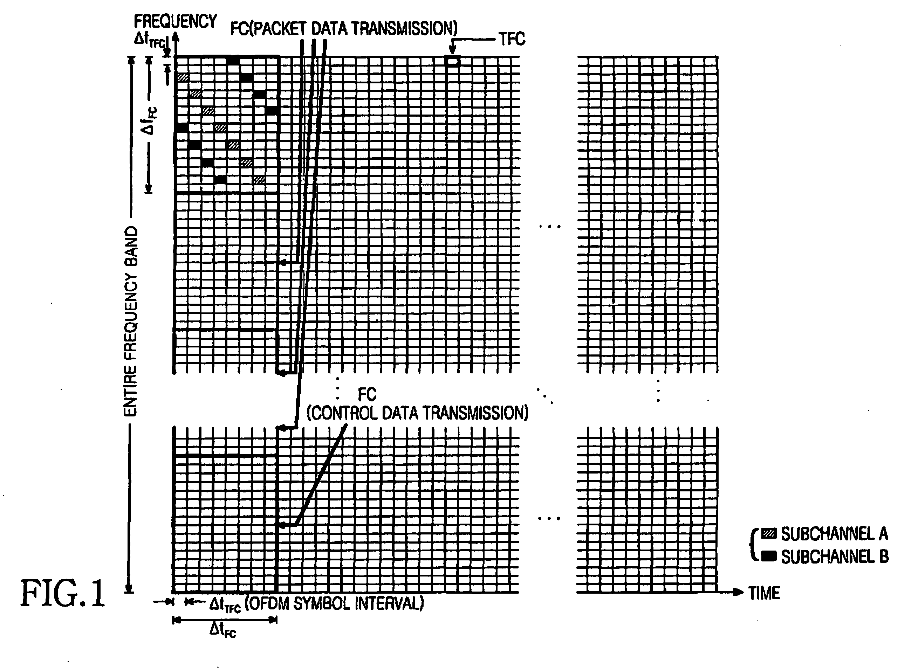

FIG. 1 is a diagram schematically illustrating a method for assigning time-frequency resources based on an FH-OFDMA/CDM scheme according to an embodiment of the present invention. Referring to FIG. 1, the FH-OFDMA/CDM scheme, as described above, maximizes a performance gain by combining characteristics of OFDM scheme, CDMA scheme and FH scheme, and divides the total bandwidth into a plurality of sub-carrier domains, or sub-frequency domains (or bands). As illustrated in FIG. 1, a domain having a frequency domain _{TFC} comprised of a predetermined number of sub-frequency domains using the same duration Δt_{TFC} as an OFDM symbol interval is defined as a "time-frequency cell (TFC)." The TFC is comprised of a predetermined number of sub-frequency domains. The number of sub-frequency domains constituting the TFC can be variably set according to a situation in the system. Further, a frequency domain occupied by the TFC is defined as a "TFC frequency domain," and a time interval occupied by the TFC is defined as a "TFC time interval." That is, unit rectangles illustrated in FIG. 1 represent TFCs. The present invention processes data corresponding to sub-frequency domains assigned to the TFC by the CDMA scheme, and processes sub-carriers corresponding to the sub-frequency domains by the OFDM scheme. The process by the CDMA scheme represents a process of spreading data by channelization codes previously uniquely assigned to the sub-carriers and scrambling the spread data by a predetermined scrambling code.

As illustrated in FIG. 1, a plurality of TFCs constitute one frame cell (FC), and the FC has a duration Δt_{FC} corresponding to a predetermined multiple of duration Δt_{TFC} of the TFC using a bandwidth Δf_{FC} corresponding to a predetermined multiple of a bandwidth Δf_{TFC} of the TFC. For convenience of explanation, it will be assumed herein that the FC has a bandwidth corresponding to 16 times a bandwidth Δf_{TFC} of the TFC (Δf_{FC} = 16Δf_{TFC}), and a duration Δt_{FC} of the FC has a duration corresponding to 8 times a duration Δt_{TFC} of the TFC (Δt_{FC} = 8Δt_{TFC}). A frequency domain occupied by the FC will be defined as an "FC frequency domain" and a time domain occupied by the FC will be defined as an "FC time interval." The reason for defining FC in this way is to prevent interference caused by frequent report on a measurement result for radio transmission such as channel quality information (CQI) when an Adaptive Modulation and Coding (AMC) scheme is used in a communication system employing the FH-OFDMA/CDM scheme (FH-OFDMA/CDM communication system). The entire frequency band of the FH-OFDMA/CDM communication system is divided into a predetermined number of FC frequency bands. For the convenience of explanation, it will be assumed herein that the entire frequency band of the FH-OFDMA/CDM communication system is divided into M FC frequency bands. Of the divided M FCs, first to (M-1)^{th} FCs are used for transmission of packet data, and an M^{th} FC is used for transmission of control data, or control information. The number of FCs used for transmission of packet data and the number of FCs used for transmission of control information can be variably set according to system conditions. The number of FCs for transmission of packet data and the number of FCs for transmission of control information are determined in consideration of a problem that as the number of FCs used for transmission of control information increases, the number of FCs used for transmission of packet data decreases, thereby causing a reduction in data rate. Herein, for the convenience of explanation, the FC used for transmission of packet data will be defined as a "data FC," and the FC used for transmission of control information will be defined as a "control FC."

In FIG. 1, two different sub-channels, i.e., a sub-channel A and a sub-channel B, are included in one FC. The "sub-channel" refers to a channel over which a predetermined number of FCs are frequency-hopped before being transmitted according to a predetermined frequency hopping pattern with the passage of time. The number of TFCs constituting the sub-channel and the frequency hopping pattern can be variably set according to system conditions. For the convenience of explanation, it will be assumed herein that 8 TFCs constitute one sub-channel.

When an AMC scheme is used in the FH-OFDMA/CDM communication system, a mobile station performs an operation of measuring a status of a radio link at predetermined periods and reporting the measured result to a base station. A status of the radio link can be detected through, for example, channel quality information (CQI). The base station adjusts a modulation scheme and a coding scheme based on the status information of the radio link reported from the mobile station, and informs the mobile station of the adjusted modulation scheme and coding scheme. Then the mobile station transmits signals according to the adjusted modulation scheme and coding scheme, formed by the base station. In the present invention, because a report on status information of the radio link is made on an FC basis, a signaling load which may occur due to use of the AMC scheme is minimized and interference due to the signaling is also minimized. That is, control information is transmitted through the FC for transmission of control information. The sub-channel must be assigned to a particular mobile station considering quality of service (QoS) of the mobile station together with all mobile stations in service.

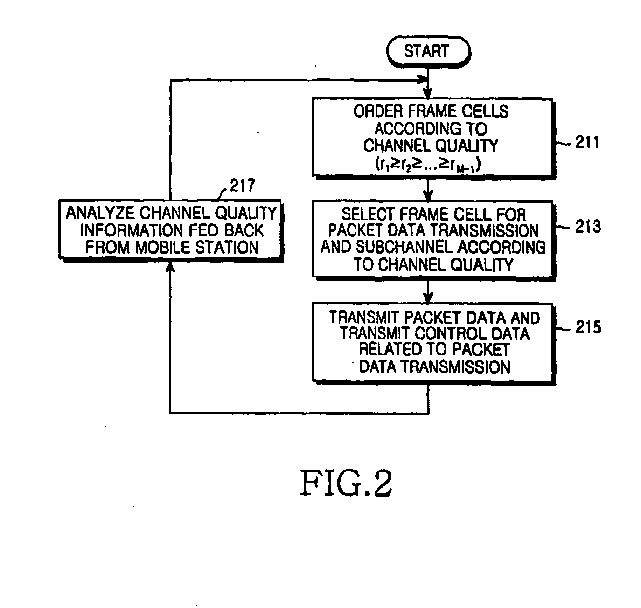

FIG. 2 is a flowchart schematically illustrating a procedure for assigning a sub-channel based on channel quality according to an embodiment of the present invention. Before a description of FIG. 2 is given, it should be noted that although the procedure for assigning a sub-channel according to channel quality is performed in all mobile stations in communication with a base station, it will be assumed in FIG. 2 that the procedure is performed between a base station and a particular mobile station, for convenience of explanation.

Referring to FIG. 2, in step 211, a base station analyzes channel quality information fed back from a mobile station, sequentially orders (M-1) FCs of the FH-OFDMA/CDM communication system from an FC having the best channel quality to an FC having the worst channel quality, and then proceeds to step 213. Here, the mobile station feeds back channel quality information of the FCs to the base station, and the channel quality information can include signal-to-noise ratio (SNR). In addition, m^{th} channel quality is defined as "rₘ" and the rₘ represents channel quality of an m^{th} FC. It will be assumed in step 211 that channel quality r₁ of a first FC is best, and channel quality r_{M-1} of an (M-1)^{th} FC is worst (r₁ ≥ r₂ ≥ ... ≥ r_{M-1}).

After ordering FCs according to the channel quality, the base station selects, in step 213, FCs for transmission of packet data and sub-channels based on the channel quality according to the amount of the transmission packet data, and then proceeds to step 215. The FCs for transmission of packet data are sequentially selected from an FC having the best channel quality. For example, when there is a sub-channel available for an FC having the best channel quality, the FC is selected. When there is no sub-channel available for an FC having the best channel quality, if there is a sub-channel available for an FC having the second best channel quality, the FC having the second best channel quality is selected. A process of selecting FCs according to the amount of transmission packet data and selecting sub-channels will be described below.

In step 215, the base station transmits the packet data over a corresponding sub-channel of the selected FC, transmits control information related to transmission of the packet data through the FCs for transmission of control information, and then proceeds to step 217. In step 217, the base station receives channel quality information fed back from the mobile station, analyzes the received channel quality information, and then returns to step 211.

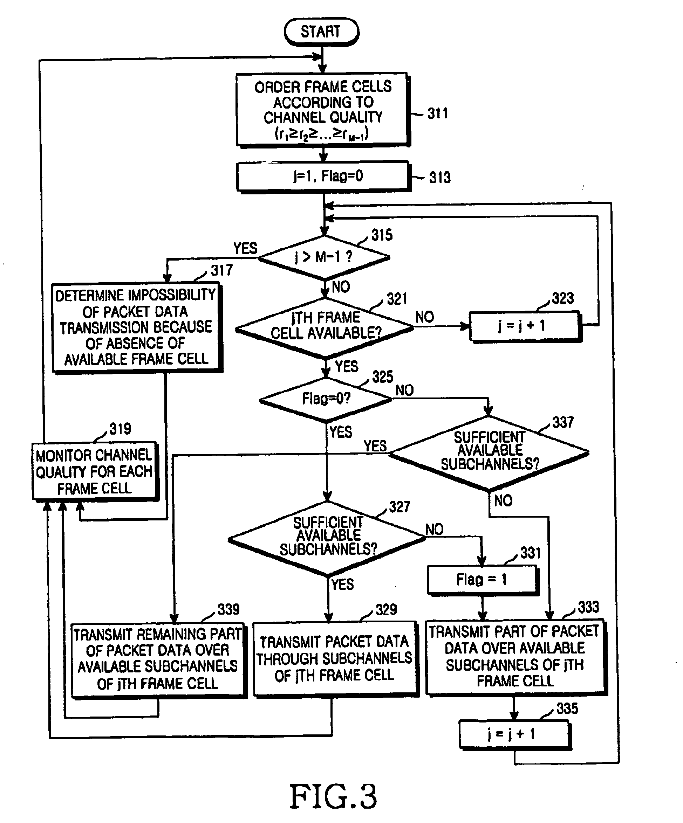

FIG. 3 is a detailed flowchart illustrating the sub-channel assignment procedure of FIG. 2. Before a description of FIG. 3 is given, it should be noted that although the procedure for assigning a sub-channel according to channel quality is performed in all mobile stations in communication with a base station, it will be assumed in FIG. 3 that the procedure is performed between a base station and a particular mobile station, for convenience of explanation.

Referring to FIG. 3, in step 311, a base station analyzes channel quality information fed back from a mobile station, sequentially orders (M-1) FCs of the FH-OFDMA/CDM communication system from an FC having the best channel quality to an FC having the worst channel quality, and then proceeds to step 313. It will be assumed in step 311 that channel quality r₁ of a first FC is best, and channel quality r_{M-1} of an (M-1)^{th} FC is worst (r₁ ≥ r₂ ≥ ... ≥ r_{M-1}). Step 211 described in FIG. 2 is substantially identical to step 311. In step 313, the base station sets a parameter j indicating the number of FCs in the FH-OFDMA/CDM communication system to '1' (j = 1), sets a flag indicting whether transmission packet data is transmitted through one FC or two or more FCs, to '0' (Flag = 0), and then proceeds to step 315. It is assumed herein that the number of FCs in the FH-OFDMA/CDM communication system is M-1, and the parameter j is set to determine whether an available sub-channel exists in a corresponding FC. The flag is set to '0' when transmission packet data is transmitted through one FC, and the flag is set to '1' when transmission packet data is transmitted through two or more FCs, i.e., when the transmission packet data is divided before being transmitted. The flag is set to indicate whether the transmission packet data is to be transmitted through one FC or distributed to a plurality of FCs before being transmitted. "The number of FCs" represents the number of FCs existing one FC time interval Δt_{FC}.

The base station determines in step 315 whether a value of the parameter j exceeds M-1 (j > M-1). If it is determined that a value of the parameter j exceeds M-1, the base station proceeds to step 317. A value of the parameter j exceeds M-1 means that there is no available FC. In step 317, the base station determines that transmission of packet data is not possible because there is no available FC, and then proceeds to step 319. In step 319, the base station monitors channel quality for each FC, and then returns to step 311. Here, "monitoring channel quality for each FC" means analyzing channel quality information received from a mobile station and monitoring channel quality corresponding to the channel quality information. However, if it is determined in step 315 that a value of the parameter j does not exceed M-1 (j ≤ M-1), the base station proceeds to step 321. The base station determines in step 321 whether a j^{th} FC can be used for transmission of the packet data, i.e., whether the j^{th} FC is available. If it is determined that the j^{th} FC is not available, the base station proceeds to step 323. In step 323, the base station increases a value of the parameter j by 1 (j = j + 1), and then returns to step 315. Here, the reason for increasing a value of the parameter j by 1 is to determine whether a (j+1)^{th} FC is available because the j^{th} FC is not available.

If it is determined in step 321 that the j^{th} FC is available, the base station proceeds to step 325. In step 325, the base station determines whether a value of the flag is set to 0. If it is determined that a value of the flag is set to 0, the base station proceeds to step 327. Here, "a value of the flag is set to 0" means that transmission packet data can be transmitted through one FC, as described above. In step 327, the base station determines whether sufficient available sub-channels for transmission of the packet data exist in the j^{th} FC. Here, "sufficient available sub-channels for transmission of packet data exist in the j^{th} FC" means that at least three available sub-channels exist in the j^{th} FC because, for example, three sub-channels are required for transmission of the packet data. If it is determined that sufficient available sub-channels for transmission of the packet data exist in the j^{th} FC, the base station proceeds to step 329. In step 329, the base station assigns packet data so that the packet data is transmitted over available sub-channels in the j^{th} FC, and then proceeds to step 319.

If it is determined in step 327 that sufficient available sub-channels for transmission of the packet data do not exist in the j^{th} FC, the base station proceeds to step 331. Here, "sufficient available sub-channels for transmission of the packet data do not exist in the j^{th} FC" means that less than three available sub-channels exist in the j^{th} FC because, for example, three sub-channels are required for transmission of the packet data. In step 331, the base station sets a value of the flag to 1 (Flag = 1) because sufficient available sub-channels for transmission of the packet data do not exist in the j^{th} FC, and then proceeds to step 333. Here, a value of the flag is set to 1 because transmitting packet data through only the j^{th} FC is not possible, i.e., because transmitting packet data through only one FC is not possible since sufficient available sub-channels for transmission of the packet data do not exist in the j^{th} FC.

In step 333, the base station assigns packet data so that only a part of the packet data is transmitted over available sub-channels in the j^{th} FC, and then proceeds to step 335. In step 335, the base station increases a value of the parameter j by 1 (j = j + 1), and then returns to step 315. Here, the reason for increasing a value of the parameter j by 1 is to transmit packet data through a (j+1)^{th} FC because transmitting packet data through only the j^{th} FC is not possible.

If it is determined in step 325 that a value of the flag is not set to 0, i.e., if a value of the flag is set to 1, the base station proceeds to step 337. In step 337, the base station determines whether sufficient available sub-channels for transmission of the packet data exist in the j^{th} FC. If it is determined in step 337 that sufficient available sub-channels for transmission of the packet data do not exist in the j^{th} FC, the base station proceeds to step 333. However, if it is determined in step 337 that sufficient available sub-channels for transmission of the packet data exist in the j^{th} FC, the base station proceeds to step 339. In step 339, the base station assigns packet data so that the remaining part of the packet data is transmitted over available sub-channels in the j^{th} FC, and then proceeds to step 319.

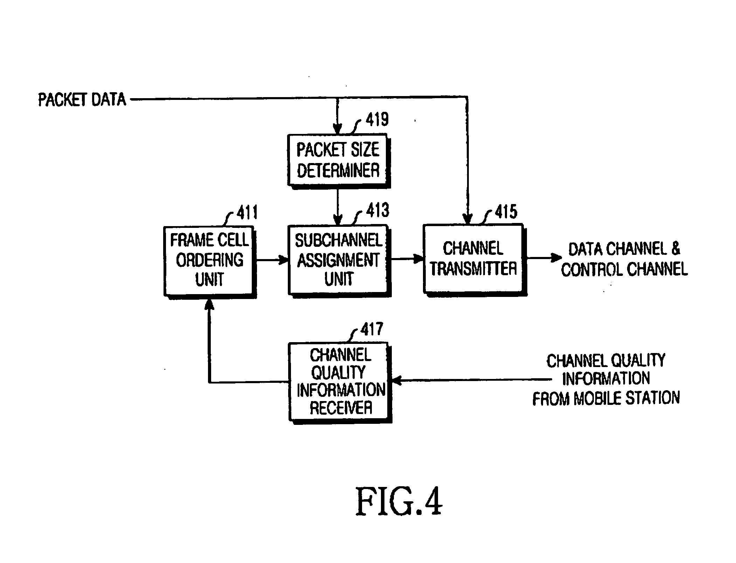

FIG. 4 is a block diagram illustrating an internal structure of a base station apparatus according to an embodiment of the present invention. Referring to FIG. 4, the base station apparatus is comprised of a frame cell ordering unit 411, a sub-channel assignment unit 413, a channel transmitter 415, a channel quality information receiver 417, and a packet size determiner 419. Channel quality information fed back from a mobile station is input to the channel quality information receiver 417. The channel quality information receiver 417 detects channel quality for all data FCs, i.e., (M-1) data FCs, of the FH-OFDMA/CDM communication system using the received channel quality information, and outputs the detected result to the frame cell ordering unit 411. The frame cell ordering unit 411 sequentially orders the (M-1) data FCs from an FC having the best channel quality using the channel quality information output from the channel quality information receiver 417, and outputs the ordering result to the sub-channel assignment unit 413. The sub-channel assignment unit 413 assigns sub-channels for transmitting packet data according to the channel quality-based ordering result output from the frame cell ordering unit 411. An operation of assigning FCs and sub-channels for transmission of packet data by the sub-channel assignment unit 413 has been described with reference to FIGs. 2 and 3.

After the sub-channel assignment unit 413 completes assignment of FCs and sub-channels for transmission of packet data, the channel transmitter 415 channel-processes the packet data according to the sub-channel assignment result and transmits the packet data over the assigned sub-channels. Further, the channel transmitter 415 channel-processes control information related to transmission of the packet data and transmits the control information over sub-channels assigned for transmission of control information. Here, a sub-channel over which the packet data is transmitted is defined as "data channel," and a sub-channel over which the control information is transmitted is defined as "control channel." The data channel is transmitted through the data FC, and the control channel is transmitted through the control FC. The sub-channel assignment unit 413 assigns sub-channels to be assigned to transmission packet data according to a packet size provided from the packet size determiner 419. Upon receiving transmission packet data, the packet size determiner 419 detects a size of the packet data and informs the sub-channel assignment unit 413 of the detected packet size, and then the sub-channel assignment unit 413 assigns sub-channels according to the size of the packet data.

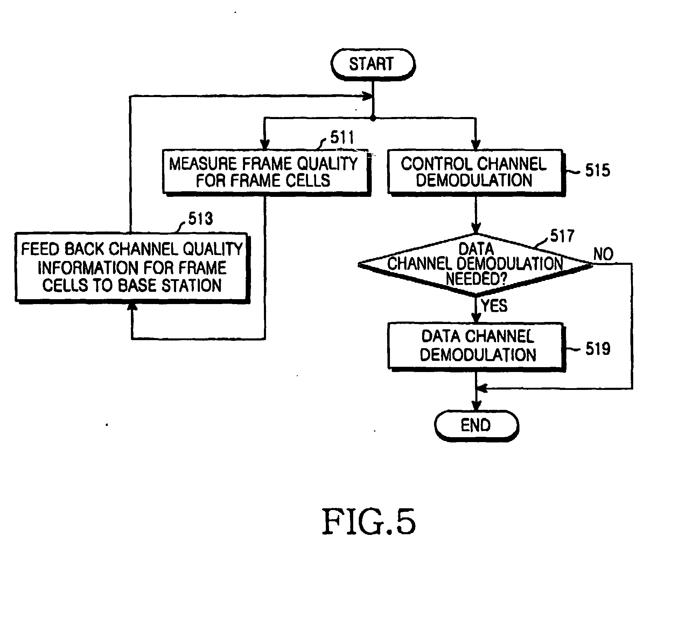

FIG. 5 is a flowchart illustrating an operating procedure of a mobile station according to an embodiment of the present invention. Referring to FIG. 5, a mobile station receives signals corresponding to M FCs from a base station for an FC time interval. In step 511, the mobile station measures channel qualities for the received (M-1) data FCs, and then proceeds to step 513. Further, in step 515, the mobile station demodulates control channels included in a control FC among the M FCs, and then proceeds to step 517. In step 513, the mobile station feeds back channel quality information for the (M-1) data FCs to the base station, and then returns to steps 511 and 515.

In step 517, the mobile station determines whether it is necessary to demodulate a data channel as a demodulation result on the control channel. If it is determined that it is not necessary to demodulate the data channel, the mobile station ends the procedure. However, if it is determined in step 517 that it is necessary to demodulate the data channel, the mobile station proceeds to step 519. In step 519, the mobile station demodulates data channel in the data FCs, and ends the procedure.

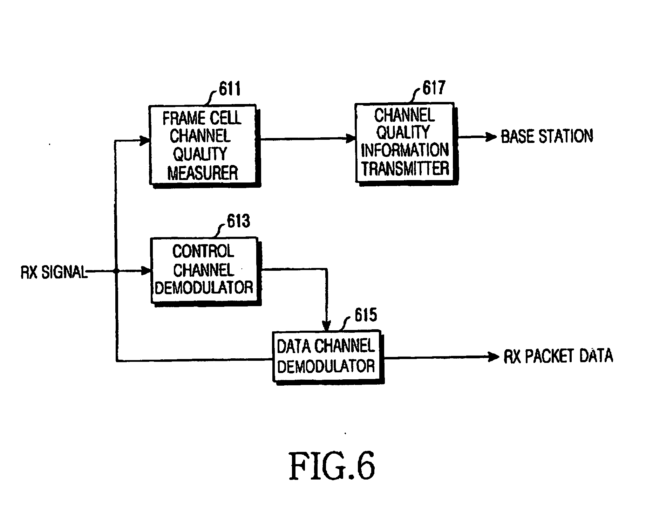

FIG. 6 is a block diagram illustrating a structure of a mobile station apparatus according to an embodiment of the present invention. Referring to FIG. 6, the mobile station apparatus is comprised of a frame cell channel quality measurer 611, a control channel demodulator 613, a data channel demodulator 615, and a channel quality information transmitter 617. The mobile station receives signals corresponding to M FCs from a base station for an FC time interval. The received M FCs are input to the frame cell channel quality measurer 611, the control channel demodulator 613, and the data channel demodulator 615. The frame cell channel quality measurer 611 measures channel quality for the received (M-1) data FCs, and outputs the result to the channel quality information transmitter 617. The channel quality information transmitter 617 determines channel quality information for each of the (M-1) data FCs based on the channel qualities for the (M-1) data FCs output from the frame cell channel quality measurer 611, and feeds back the determined channel quality information to the base station.

The control channel demodulator 613 demodulates control channels in a control FC among the received M FCs. As a result of demodulation on the control channels, if it is determined that there is a data channel targeting the mobile station, the control channel demodulator 613 informs the data channel demodulator 615 that the data channel should be demodulated. Then the data channel demodulator 615 demodulates a corresponding data channel from the M FCs under the control of the control channel demodulator 613, and outputs the demodulated signal as received packet data.

As is understood from the foregoing description, the FH-OFDMA/CDM scheme proposed in the present invention transmits/receives data and control information by efficiently assigning time-frequency resources, thereby contributing to efficient use of the time-frequency resources and maximization of spectrum efficiency. Further, in the FH-OFDMA/CDM communication system, FCs and sub-channels are adaptively assigned according to channel quality for data transmission/reception, thereby maximizing data transmission efficiency. Moreover, for data transmission/reception, an FC having the best channel quality and sub-channels are adaptively assigned according to channel quality, thereby providing excellent service quality.

## Claims

1. A method for transmitting data by a transmitter in a communication system that divides an entire frequency band into a plurality of sub-frequency bands, the method comprising the steps of:
receiving channel quality information for each of a plurality of frame cells, fed back from a receiver;
ordering the frame cells according to the channel quality information; and
transmitting the data through a frame cell according to the ordered channel quality information,
wherein the communication system comprises a plurality of sub-channels and a plurality of frame cells, each sub-channel comprising a predetermined number of sub-frequency bands, and each frame cell occupying a frequency domain and a time domain based on a plurality of sub-channels.

2. The method of claim 1, wherein the frame cells are sequentially ordered from a frame cell having the best channel quality to a frame cell having the worst channel quality.

3. The method of claim 1 or 2, further comprising the step of transmitting the data through a frame cell having the second best channel quality if there is no available sub-channel for transmission of the data in a frame cell having the best channel quality.

4. The method of any of claims 1 to 3, further comprising the step of, if available sub-channels are less in number than sub-channels necessary for transmission of the data exist in a frame cell having the best channel quality, transmitting a part of the data through available sub-channels of the frame cell having the best channel quality, and transmitting the remaining part of the data through a frame cell having the next best channel quality.

5. The method of any of claims 1 to 4, wherein the data is packet data or control data, the frame cells are classified into packet data transmission frame cells for transmission of the packet data and control data transmission frame cells for transmission of the control data, and the channel quality information is fed back through the control data transmission frame cells.

6. The method of claim 5, wherein at least one of the frame cells is assigned as the control data transmission frame cell.

7. The method of any of claims 1 to 6, wherein a sub-frequency of sub-frequency bands constituting each of the time-frequency cells hops according to a predetermined frequency hopping pattern.

8. The method of any of claims 1 to 7, wherein each of the time-frequency cells is spread with a predetermined spread code.

9. A method for receiving data by a receiver in a communication system that divides an entire frequency band into a plurality of sub-frequency bands, the method comprising the steps of:
measuring channel qualities of a plurality of frame cells using a signal received from a transmitter; and
feeding back the channel quality information measured for each of the frame cells to the transmitter,
wherein the communication system comprises a plurality of sub-channels and a plurality of frame cells, each sub-channel comprising a predetermined number of sub-frequency bands, and each frame cell occupying a frequency domain and a time domain based on a plurality of sub-channels.

10. The method of claim 9, wherein the frame cells are divided into packet data transmission frame cells for transmission of packet data and control data transmission frame cells for transmission of control data, and the channel quality information is fed back through the control data transmission frame cells.

11. The method of claim 10, wherein at least one of the frame cells is assigned as the control data transmission frame cell.

12. The method of any of claims 1 to 11, wherein a subfrequency of sub-frequency bands constituting each of the time-frequency cells hops according to a predetermined frequency hopping pattern.

13. The method of any of claims 1 to 12, wherein each of the time-frequency cells is spread with a predetermined spread code.

14. A data transmission apparatus for a transmitter in a communication system that divides an entire frequency band into a plurality of sub-frequency bands, the apparatus comprising:
a channel quality information receiver (417) for receiving channel quality information for each of a plurality of frame cells, fed back from a receiver;
a frame cell ordering unit (411) for analyzing the feedback channel quality information and ordering the frame cells according to the channel quality information; and
a sub-channel assignment unit (413) for transmitting the data through a frame cell according to the ordered channel quality information
wherein the communication system comprises a plurality of sub-channels and a plurality of frame cells, each sub-channel comprising a pre-determined number of sub-frequency bands, and each frame cell occupying a frequency domain and a time domain based on a plurality of sub-channels.

15. The data transmission apparatus of claim 14, wherein the frame cellordering unit is adapted to sequentially order the frame cells from a frame cell having the best channel quality to a frame cell having the worst channel quality.

16. The data transmission apparatus of claim 14 or 15, wherein the sub-channel assignment unit is adapted to perform a control operation of transmitting the data through sub-channels of a frame cell having the second best channel quality if there is no available sub-channel for transmission of the data in a frame cell having the best channel quality.

17. The data transmission apparatus of any of claims 14 to 16, wherein the sub-channel assignment unit is further adapted to perform a control operation of, if available sub-channels are less in number than sub-channels necessary for transmission of the data exist in a frame cell having the best channel quality, transmitting a part of the data through available sub-channels of the frame cell having the best channel quality, and transmitting the remaining part of the data through sub-channels of a frame cell having the next best channel quality.

18. The data transmission apparatus of any of claims 14 to 17, wherein the data is one of packet data and control data, the frame cells are classified into packet data transmission frame cells for transmission of the packet data and control data transmission frame cells for transmission of the control data, and the channel quality information is fed back through the control data transmission frame cells.

19. The data transmission apparatus of claim 18, wherein at least one of the frame cells is assigned as the control data transmission frame cell.

20. The data transmission apparatus of any of claims 14 to 19, wherein a sub-frequency of sub-frequency bands constituting each of the time-frequency cells hops according to a predetermined frequency hopping pattern.

21. The data transmission apparatus of any of claims 14 to 20, wherein each of the time-frequency cells is spread with a predetermined spread code.

22. A data reception apparatus for a receiver in a communication system that divides an entire frequency band into a plurality of sub-frequency bands, the apparatus comprising:
a frame cell channel quality measurer (611) for measuring channel qualities of a plurality of frame cells using a signal received from a transmitter; and
a channel quality information transmitter (617) for feeding back the channel quality information measured for each of the frame cells to the transmitter,
wherein the communication system comprises a plurality of sub-channels and a plurality of frame cells, each sub-channel comprising a predetermined number of sub-frequency bands, and each frame cell occupying a frequency domain and a time domain based on a plurality of sub-channels.

23. The data reception apparatus of claim 22, wherein the frame cells are divided into packet data transmission frame cells for transmission of packet data and control data transmission frame cells for transmission of control data, and the channel quality information is fed back through the control data transmission frame cells.

24. The data reception apparatus of claim 23, wherein at least one of the frame cells is assigned as the control data transmission frame cell.

25. The data reception apparatus of any of claims 22, wherein a sub-frequency of sub-frequency bands constituting each of the time-frequency cells hops according to a predetermined frequency hopping pattern.

26. The data reception apparatus of any of claims 22 to 25, wherein each of the time-frequency cells is spread with a predetermined spread code.

## Patentansprüche

1. Verfahren zum Senden von Daten durch einen Sender in einem Kommunikationssystem, das ein ganzes Frequenzband in eine Vielzahl von Teilfrequenzbändern unterteilt, das Verfahren umfasst die folgenden Schritte:
Empfangen von Kanalqualitätsinformation für jede einer Vielzahl von Rahmenzellen, die von einem Empfänger rückgemeldet wird,
Ordnen der Rahmenzellen entsprechend der Kanalqualitätsinformation und
Senden der Daten durch eine Rahmenzelle entsprechend der geordneten Kanalqualitätsinformation,
wobei das Kommunikationssystem eine Vielzahl von Teilkanälen und eine Vielzahl von Rahmenzellen umfasst, wobei jeder Teilkanal eine vorgegebene Anzahl von Teilfrequenzbändern umfasst und jede Rahmenzelle eine Frequenzdomäne und eine Zeitdomäne basierend auf einer Vielzahl von Teilkanälen besetzt.

2. Verfahren nach Anspruch 1, wobei die Rahmenzellen von einer Rahmenzelle mit der besten Kanalqualität zu einer Rahmenzelle mit der schlechtesten Kanalqualität in sequenzielle Reihenfolge gebracht werden.

3. Verfahren nach Anspruch 1 oder 2, des Weiteren den Schritt des Sendens der Daten durch eine Rahmenzelle mit der zweitbesten Kanalqualität umfassend, wenn kein verfügbarer Teilkanal zum Senden der Daten in einer Rahmenzelle mit der besten Kanalqualität vorhanden ist.

4. Verfahren nach einem der Ansprüche 1 bis 3, des Weiteren den Schritt des Sendens, wenn die verfügbaren Teilkanäle in der Anzahl kleiner als die Anzahl der zum Senden der vorhandenen Daten in einer Rahmenzelle mit der besten Kanalqualität erforderlichen sind, eines Teils der Daten durch verfügbare Teilkanäle der Rahmenzelle mit der besten Kanalqualität und des Sendens des verbleibenden Teils der Daten durch eine Rahmenzelle mit der nächstbesten Kanalqualität umfassend.

5. Verfahren nach einem der Ansprüche 1 bis 4, wobei die Daten Paketdaten oder Steuerdaten sind, die Rahmenzellen in Paketdaten-Senderahmenzellen zum Senden der Paketdaten und Steuerdaten-Senderahmenzellen zum Senden der Steuerdaten eingeteilt sind und die Kanalqualitätsinformation durch die Steuerdaten-Senderahmenzellen rückgemeldet wird.

6. Verfahren nach Anspruch 5, wobei wenigstens eine der Rahmenzellen als die Steuerdaten-Senderahmenzelle zugewiesen ist.

7. Verfahren nach einem der Ansprüche 1 bis 6, wobei eine Teilfrequenz der Teilfrequenzbänder, die jede der Zeitfrequenzzellen bildet, entsprechend einem vorgegebenen Frequenzsprungmuster springt.

8. Verfahren nach einem der Ansprüche 1 bis 7, wobei jede der Zeitfrequenzzellen mit einem vorgegebenen Spreizcode gespreizt wird.

9. Verfahren zum Empfangen von Daten durch einen Empfänger in einem Kommunikationssystem, das ein ganzes Frequenzband in eine Vielzahl von Teilfrequenzbändern unterteilt, das Verfahren umfasst die folgenden Schritte:
Messen der Kanalqualitäten einer Vielzahl von Rahmenzellen unter Verwendung eines von einem Sender empfangenen Signals und
Rückmelden der für jede der Rahmenzellen gemessenen Kanalqualitätsinformation zu dem Sender,
wobei das Kommunikationssystem eine Vielzahl von Teilkanälen und eine Vielzahl von Rahmenzellen umfasst, wobei jeder Teilkanal eine vorgegebene Anzahl von Teilfrequenzbändern umfasst und jede Rahmenzelle eine Frequenzdomäne und eine Zeitdomäne basierend auf einer Vielzahl von Teilkanälen besetzt.

10. Verfahren nach Anspruch 9, wobei die Rahmenzellen in Paketdaten-Senderahmenzellen zum Senden von Paketdaten und in Steuerdaten-Senderahmenzellen zum Senden der Steuerdaten eingeteilt werden und die Kanalqualitätsinformation durch die Steuerdaten-Senderahmenzellen rückgemeldet wird.

11. Verfahren nach Anspruch 10, wobei wenigstens eine der Rahmenzellen als die Steuerdaten-Senderahmezelle zugewiesen ist.

12. Verfahren nach einem der Ansprüche 1 bis 11, wobei eine Teilfrequenz der Teilfrequenzbänder, die jede der Zeitfrequenzzellen bildet, entsprechend einem vorgegebenen Frequenzsprungmuster springt.

13. Verfahren nach einem der Ansprüche 1 bis 12, wobei jede der Zeitfrequenzzellen mit einem vorgegebenen Spreizcode gespreizt wird.

14. Datensendevorrichtung für einen Sender in einem Kommunikationssystem, die ein ganzes Frequenzband in eine Vielzahl von Teilfrequenzbändern unterteilt, die Vorrichtung umfasst:
einen Kanalqualitätsinformations-Empfänger (417) zum Empfangen von Kanalqualitätsinformation für jede einer Vielzahl von Rahmenzellen, die von einem Empfänger rückgemeldet wird,
eine Rahmenzellen-Ordnungseinheit (411) zum Analysieren der zurückgemeldeten Kanalqualitätsinformation und zum Ordnen der Rahmenzellen entsprechend der Kanalqualitätsinformation und
eine Teilkanal-Zuweisungseinheit (413) zum Senden der Daten durch eine Rahmenzelle entsprechend der geordneten Kanalqualitätsinformation,
wobei das Kommunikationssystem eine Vielzahl von Teilkanälen und eine Vielzahl von Rahmenzellen umfasst, wobei jeder Teilkanal eine vorgegebene Anzahl von Teilfrequenzbändern umfasst und jede Rahmenzelle eine Frequenzdomäne und eine Zeitdomäne basierend auf einer Vielzahl von Teilkanälen besetzt.

15. Datensendevorrichtung nach Anspruch 14, wobei die Rahmenzellen-Ordnungseinheit eingerichtet ist, um die Rahmenzellen von einer Rahmenzelle mit der besten Kanalqualität zu einer Rahmenzelle mit der schlechtesten Kanalqualität in sequenzielle Reihenfolge zu bringen.

16. Datensendevorrichtung nach Anspruch 14 oder 15, wobei die Teilkanal-Zuweisungseinheit eingerichtet ist, um einen Steuervorgang des Sendens der Daten durch Teilkanäle einer Rahmenzelle mit der zweitbesten Kanalqualität durchzuführen, wenn kein verfügbarer Teilkanal zum Senden der Daten in einer Rahmenzelle mit der besten Kanalqualität vorhanden ist.

17. Datensendevorrichtung nach einem der Ansprüche 14 bis 16, wobei die Teilkanal-Zuweisungseinheit des Weiteren eingerichtet ist, um, wenn die verfügbaren Teilkanäle kleiner in der Anzahl als die zum Senden der vorhandenen Daten in einer Rahmenzelle mit der besten Kanalqualität erforderlichen sind, einen Steuervorgang des Sendens eines Teils der Daten durch verfügbare Teilkanäle der Rahmenzellen mit der besten Kanalqualität und des Sendens des verbleibenden Teils der Daten durch Teilkanäle einer Rahmenzelle mit der nächstbesten Kanalqualität durchzuführen.

18. Datensendevorrichtung nach den Ansprüchen 14 bis 17, wobei die Daten Paketdaten oder Steuerdaten sind, die Rahmenzellen in Paketdaten-Senderahmenzellen zum Senden von Paketdaten und in Steuerdaten-Senderahmenzellen zum Senden der Steuerdaten eingeteilt werden und die Kanalqualitätsinformation durch die Steuerdaten-Senderahmenzellen rückgemeldet wird.

19. Datensendevorrichtung nach Anspruch 18, wobei wenigstens eine der Rahmenzellen als die Steuerdaten-Senderahmenzelle zugewiesen ist.

20. Datensendevorrichtung nach einem der Ansprüche 14 bis 19, wobei eine Teilfrequenz der Teilfrequenzbänder, die jede der Zeitfrequenzzellen bildet, entsprechend einem vorgegebenen Frequenzsprungmuster springt.

21. Datensendevorrichtung nach einem der Ansprüche 14 bis 20, wobei jede der Zeitfrequenzzellen mit einem vorgegebenen Spreizcode gespreizt wird.

22. Datenempfangsvorrichtung für einen Empfänger in einem Kommunikationssystem, die ein ganzes Frequenzband in eine Vielzahl von Teilfrequenzbändern unterteilt, die Vorrichtung umfasst:
einen Rahmenzellen-Kanalqualitätsmesser (611) zum Messen der Kanalqualitäten einer Vielzahl von Rahmenzellen unter Verwendung eines von einem Sender empfangenen Signals und
einen Kanalqualitätsinformations-Sender (617) zum Rückmelden der für jede der Rahmenzellen gemessenen Kanalqualität zu dem Sender,
wobei das Kommunikationssystem eine Vielzahl von Teilkanälen und eine Vielzahl von Rahmenzellen umfasst, wobei jeder Teilkanal eine vorgegebene Anzahl von Teilfrequenzbändern umfasst und jede Rahmenzelle eine Frequenzdomäne und eine Zeitdomäne basierend auf einer Vielzahl von Teilkanälen besetzt.

23. Datenempfangsvorrichtung nach Anspruch 22, wobei die Rahmenzellen in Paketdaten-Senderahmenzellen zum Senden von Paketdaten und in Steuerdaten-Senderahmenzellen zum Senden der Steuerdaten eingeteilt werden und die Kanalqualitätsinformation durch die Steuerdaten-Senderahmenzellen rückgemeldet wird.

24. Datenempfangsvorrichtung nach Anspruch 23, wobei wenigstens eine der Rahmenzellen als die Steuerdaten-Senderahmenzelle zugewiesen ist.

25. Datenempfangsvorrichtung nach Anspruch 22, wobei eine Teilfrequenz der Teilfrequenzbänder, die jede der Zeitfrequenzzellen bildet, entsprechend einem vorgegebenen Frequenzsprungmuster springt.

26. Datenempfangsvorrichtung nach einem der Ansprüche 22 bis 25, wobei jede der Zeitfrequenzzellen mit einem vorgegebenen Spreizcode gespreizt wird.

## Revendications

1. Procédé d'émission de données par un émetteur dans un système de communication qui divise une bande entière de fréquence en une pluralité de bandes de sous-fréquence, le procédé comprenant les étapes consistant à :
recevoir des informations de qualité de canal pour chacune des cellules d'une pluralité de cellules de trame, renvoyées par un récepteur ;
classer les cellules de trame en fonction des informations de qualité de canal ; et
émettre les données dans une cellule de trame en fonction des informations de qualité de canal classées,
dans lequel le système de communication comprend une pluralité de sous-canaux et une pluralité de cellules de trame, chaque sous-canal comprenant un nombre prédéterminé de bandes de sous-fréquence et chaque cellule de trame occupant un domaine fréquentiel et un domaine temporel basés sur une pluralité de sous-canaux.

2. Procédé selon la revendication 1, dans lequel les cellules de trame sont classées séquentiellement, de la cellule de trame ayant la meilleure qualité de canal à la cellule de trame ayant la pire qualité de canal.

3. Procédé selon la revendication 1 ou 2, comprenant en outre l'étape consistant à émettre les données dans une cellule de trame occupant le second rang de qualité de canal s'il n'y a pas de sous-canal disponible pour l'émission des données dans une cellule de trame ayant la meilleure qualité de canal.

4. Procédé selon l'une quelconque des revendications 1 à 3, comprenant en outre l'étape consistant à émettre une partie des données sur des sous-canaux disponibles de la cellule de trame ayant la meilleure qualité de canal et à émettre le reste des données sur une cellule de trame ayant la qualité de canal suivante, si les sous-canaux disponibles, dans une cellule de trame ayant la meilleure qualité de canal, sont en moindre nombre que les sous-canaux qui seraient nécessaires pour l'émission des données.

5. Procédé selon l'une quelconque des revendications 1 à 4, dans lequel les données sont des données en paquets ou des données de commande, les cellules de trame sont classées en cellules de trame d'émission de données en paquets pour l'émission des données en paquets et en cellules de trame d'émission de données de commande pour l'émission des données de commande, et les informations de qualité de canal sont renvoyées dans les cellules de trame d'émission de données de commande.

6. Procédé selon la revendication 5, dans lequel au moins l'une des cellules de trame est affectée comme cellule de trame d'émission de données de commande.

7. Procédé selon l'une quelconque des revendications 1 à 6, dans lequel une sous-fréquence de bandes de sous-fréquence constituant chacune des cellules de temps et de fréquence effectue des sauts selon un motif de sauts de fréquence prédéterminé.

8. Procédé selon l'une quelconque des revendications 1 à 7, dans lequel chacune des cellules de temps et de fréquence est étalée à l'aide d'un code d'étalement prédéterminé.

9. Procédé de réception de données par un récepteur dans un système de communication qui divise une bande entière de fréquence en une pluralité de bandes de sous-fréquence, le procédé comprenant les étapes consistant à :
mesurer les qualités de canal d'une pluralité de cellules de trame, en utilisant un signal reçu d'un émetteur ; et
renvoyer à l'émetteur les informations de qualité de canal mesurées pour chacune des cellules de trame,
dans lequel le système de communication comprend une pluralité de sous-canaux et une pluralité de cellules de trame, chaque sous-canal comprenant un nombre prédéterminé de bandes de sous-fréquence et chaque cellule de trame occupant un domaine fréquentiel et un domaine temporel basés sur une pluralité de sous-canaux.

10. Procédé selon la revendication 9, dans lequel les cellules de trame sont divisées en cellules de trame d'émission de données en paquets pour l'émission des données en paquets et en cellules de trame d'émission de données de commande pour l'émission des données de commande, et les informations de qualité de canal sont renvoyées dans les cellules de trame d'émission de données de commande.

11. Procédé selon la revendication 10, dans lequel au moins l'une des cellules de trame est affectée comme cellule de trame d'émission de données de commande.

12. Procédé selon l'une quelconque des revendications 1 à 11, dans lequel une sous-fréquence de bandes de sous-fréquence constituant chacune des cellules de temps et de fréquence effectue des sauts selon un motif de sauts de fréquence prédéterminé.

13. Procédé selon l'une quelconque des revendications 1 à 12, dans lequel chacune des cellules de temps et de fréquence est étalée à l'aide d'un code d'étalement prédéterminé.

14. Appareil d'émission de données pour un émetteur dans un système de communication qui divise une bande entière de fréquence en une pluralité de bandes de sous-fréquence, l'appareil comprenant :
un récepteur d'informations de qualité de canal (417), destiné à recevoir des informations de qualité de canal pour chacune des cellules d'une pluralité de cellules de trame, renvoyées par un récepteur ;
une unité de classement de cellules de trame (411), destinée à analyser les informations de qualité de canal renvoyées et à classer les cellules de trame en fonction des informations de qualité de canal ; et
une unité d'attribution de sous-canaux (413), destinée à émettre les données dans une cellule de trame en fonction des informations de qualité de canal classées,
dans lequel le système de communication comprend une pluralité de sous-canaux et une pluralité de cellules de trame, chaque sous-canal comprenant un nombre prédéterminé de bandes de sous-fréquence et chaque cellule de trame occupant un domaine fréquentiel et un domaine temporel basés sur une pluralité de sous-canaux.

15. Appareil d'émission de données selon la revendication 14, dans lequel l'unité de classement de cellules de trame est adaptée pour classer séquentiellement les cellules de trame, de la cellule de trame ayant la meilleure qualité de canal à la cellule de trame ayant la pire qualité de canal.

16. Appareil d'émission de données selon la revendication 14 ou 15, dans lequel l'unité d'attribution de sous-canaux est adaptée pour effectuer une opération de commande consistant à émettre les données dans des sous-canaux d'une cellule de trame occupant le second rang de qualité de canal s'il n'y a pas de sous-canal disponible pour l'émission des données dans une cellule de trame ayant la meilleure qualité de canal.

17. Appareil d'émission de données selon l'une quelconque des revendications 14 à 16, dans lequel l'unité d'attribution de sous-canaux est en outre adaptée pour effectuer une opération de commande consistant à émettre une partie des données sur des sous-canaux disponibles de la cellule de trame ayant la meilleure qualité de canal et à émettre le reste des données sur des sous-canaux d'une cellule de trame ayant la qualité de canal suivante, si les sous-canaux disponibles, dans une cellule de trame ayant la meilleure qualité de canal, sont en moindre nombre que les sous-canaux qui seraient nécessaires pour l'émission des données.

18. Appareil d'émission de données selon l'une quelconque des revendications 14 à 17, dans lequel les données sont des données en paquets ou des données de commande, les cellules de trame sont classées en cellules de trame d'émission de données en paquets pour l'émission des données en paquets et en cellules de trame d'émission de données de commande pour l'émission des données de commande, et les informations de qualité de canal sont renvoyées dans les cellules de trame d'émission de données de commande.

19. Appareil d'émission de données selon la revendication 18, dans lequel au moins l'une des cellules de trame est affectée comme cellule de trame d'émission de données de commande.

20. Appareil d'émission de données selon l'une quelconque des revendications 14 à 19, dans lequel une sous-fréquence de bandes de sous-fréquence constituant chacune des cellules de temps et de fréquence effectue des sauts selon un motif de sauts de fréquence prédéterminé.

21. Appareil d'émission de données selon l'une quelconque des revendications 14 à 20, dans lequel chacune des cellules de temps et de fréquence est étalée à l'aide d'un code d'étalement prédéterminé.

22. Appareil de réception de données pour un récepteur dans un système de communication qui divise une bande entière de fréquence en une pluralité de bandes de sous-fréquence, l'appareil comprenant :
un mesureur de qualité de canal de cellule de trame (611), destiné à mesurer les qualités de canal d'une pluralité de cellules de trame, en utilisant un signal reçu d'un émetteur ; et
un émetteur d'informations de qualité de canal (617), destiné à renvoyer à l'émetteur les informations de qualité de canal mesurées pour chacune des cellules de trame,
dans lequel le système de communication comprend une pluralité de sous-canaux et une pluralité de cellules de trame, chaque sous-canal comprenant un nombre prédéterminé de bandes de sous-fréquence, et chaque cellule de trame occupant un domaine fréquentiel et un domaine temporel basés sur une pluralité de sous-canaux.

23. Appareil de réception de données selon la revendication 22, dans lequel les cellules de trame sont divisées en cellules de trame d'émission de données en paquets pour l'émission des données en paquets et en cellules de trame d'émission de données de commande pour l'émission des données de commande, et les informations de qualité de canal sont renvoyées dans les cellules de trame d'émission de données de commande.

24. Appareil de réception de données selon la revendication 23, dans lequel au moins l'une des cellules de trame est affectée comme cellule de trame d'émission de données de commande.

25. Appareil de réception de données selon l'une quelconque des revendications 22, dans lequel une sous-fréquence de bandes de sous-fréquence constituant chacune des cellules de temps et de fréquence effectue des sauts selon un motif de sauts de fréquence prédéterminé.

26. Appareil de réception de données selon l'une quelconque des revendications 22 à 25, dans lequel chacune des cellules de temps et de fréquence est étalée à l'aide d'un code d'étalement prédéterminé.
